Europäisches Patentamt

European Patent Office

Office européen des brevets

(19)

(11) Veröffentlichungsnummer: **0 213 061**
**B1**

(12) **EUROPÄISCHE PATENTSCHRIFT**

(45) Veröffentlichungstag der Patentschrift: **08.08.90**

(21) Anmeldenummer: **86730076.6**

(22) Anmeldetag: **07.05.86**

(51) Int. Cl.⁵: **B 26 D 3/06,** B 26 D 3/16, H 02 G 1/12

(54) **Verfahren zur Entfernung einer Kunststoffisolierschicht an Stahlrohrenden.**

(30) Priorität: **07.08.85 DE 3528682**

(43) Veröffentlichungstag der Anmeldung:
**04.03.87 Patentblatt 87/10**

(45) Bekanntmachung des Hinweises auf die Patenterteilung:
**08.08.90 Patentblatt 90/32**

(84) Benannte Vertragsstaaten:
**AT BE CH DE FR LI NL**

(56) Entgegenhaltungen:
CH-A- 368 118          US-A-3 218 709
DE-B-2 728 498       US-A-3 608 194
DE-C- 152 887         US-A-4 134 529
DE-C-3 247 512        US-A-4 296 551
GB-A- 163 029         US-A-4 305 205
GB-A-1 115 440        US-A-4 422 238
US-A-3 138 861

THE ENGINEER, Band 229, Nr. 5943/5944, 18/25 Dezember 1969, Seite 49: "Pipe Cutter"

(73) Patentinhaber: **MANNESMANN Aktiengesellschaft**
**Mannesmannufer 2**
**D-4000 Düsseldorf 1 (DE)**

(72) Erfinder: **Stucke, Walter**
**Portmannweg 8**
**D-4030 Ratingen (DE)**

(74) Vertreter: **Meissner, Peter E., Dipl.-Ing. et al**
**Patentanwaltsbüro Meissner & Meissner,**
**Herbertstrasse 22**
**D-1000 Berlin 33 (DE)**

Courier Press, Leamington Spa, England.

**Beschreibung**

Die Erfindung betrifft ein Verfahren zur Entfernung einer mittels eines Klebers auf ein Stahlrohr aufgetragenen thermoplastischen Kunststoffisolierschicht an einem Ende des Stahlrohres, wobei die thermoplastische Kunststoffisolierschicht im Abstand vom Rohrende ringförmig eingeschnitten und der dem Rohrende zugewandte Abschnitt der Kunststoffisolierschicht abgezogen wird.

Aus der DE-C-3247 512 ist beispielsweise ein Verfahren zur Beschichtung von Stahlrohren mit einer thermoplastischen Kunststoffschicht bekannt, bei dem auf die gereinigte Stahlrohroberfläche zunächst eine 30—50 µm dicke Epoxyharzschicht als Haftvermittler aufgetragen wird und darauf ein aus einer inneren Athylencopolymerisatschicht als Kleber und einer äußeren Polyäthylenschicht als thermoplastische Kunststoffisolierschicht bestehender extrudierter Doppelschlauch aufgebracht wird. Die Schichtdicke des Klebers beträgt etwa 150 µm und die der Polyäthylenschicht je nach Rohrdurchmesser und Anforderungen an die Qualität der Isolierung zwischen 2 und etwa 4 mm. Bei der Rohrummantelung mittels Schlauchextrusionsverfahren werden die Stahlrohre mit Hilfe von Kupplungskappen (DE-B-27 28 498) aus Kunststoff, die gleichzeitig auch als Rohrverschlußkappen für die spätere Lagerung verwendet werden, zu einem endlosen Strang zusammengeschoben und ummantelt. Dabei werden die Rohrverschlußkappen ebenfalls mit der Kunststoffschicht überzogen. Um eine spätere Verschweißung der Stahlrohre zu einem Leitungsstrang zu ermöglichen, werden üblicherweise noch im warmen Zustand die Enden der Stahlrohre von der Kunststoffisolierschicht wieder befreit. Hierzu ist es üblich, mit einer gewöhnlichen Messerklinge einen ringförmigen Schnitt durch die Kunststoffisolierung am Rohrende anzubringen und das zu entfernende Kunststoffmantelstück abzuziehen. In der Regel geht der durchgeführte Schnitt bis auf die Stahlrohroberfläche durch.

Es hat sich nun gezeigt, daß unter extremen Witterungsbedingungen an den Rohrenden derartig abisolierter Stahlrohre Unterrostungen der verbleibenden Korrosionsschutzisolierung vorkommen können. Diese sind zum einen darauf zurückzuführen, daß durch den Messerschnitt auch die auf dem Rohr verbleibende Schicht aus Epoxyharz verletzt wird. Zum anderen sind in der Kunststoffummantelung Texturen, d.h. innere Spannungen eingefroren, die sich insbesondere bei scharfem Frost unter −20°C schädlich auswirken. In Verbindung mit einer Lagerung im Freien über längere Zeiträume kann es dann zu den geschilderten Unterrostungen kommen.

Aufgabe der Erfindung ist es daher, ein Verfahren und eine Vorrichtung zur Durchführung dieses Verfahrens zu geben mit dem die Enden von Stahlrohren von der Kunststoffisolierschicht befreit werden können, ohne daß die Gefahr besteht, daß auch unter sehr ungünstigen Witterungsbedingungen bei Lagerung im Freien derartige Unterrostungen auftreten.

Gelöst wird diese Aufgabe durch ein Verfahren gemäß den Merkmalen des Patentanspruchs 1. Eine Vorrichtung zur Durchführung dieses Verfahrens ist im Patentanspruch 2 angegeben. Vorteilhafte Weiterbildungen der Vorrichtung sind in den Unteransprüchen 3 bis 12 gekennzeichnet.

Der Grundgedanke der Erfindung besteht zum einen darin, daß Vorsorge getroffen ist, daß das Einschneiden der Kunststoffisolierschicht auf keinen Fall bis auf die Stahlrohroberfläche erfolgt, sondern so gesteuert wird, daß die tiefste Stelle des Schnittes noch oberhalb der Unterseite der Kleberschicht liegt. Zum anderen wird der Schnitt nicht als einfacher Trennschnitt mit einer gewöhnlichen Messerklinge durchgeführt sondern als Schälvorgang, bei dem eine ringförmig um das Stahlrohr innerhalb der Kunststoffisolierung verlaufende Nut erzeugt wird. Wesentlich ist, daß diese Nut sich nach oben hin, d.h. von der Stahlrohrachse aus gesehen, erweitert. Dies führt dazu, daß die Schittfläche an der auf dem Stahlrohr verbleibenden Kunststoffisolierschicht abgeschrägt ist. Sie hat also ein böschungsartiges Aussehen. Dadurch wird die Wirkung der in der Kunststoffisolierschicht eingefrorenen Textur wesentlich abgemildert.

Im folgenden wird anhand der Figuren 1 bis 4 die Erfindung näher erläutert. Es zeigen:

Fig. 1 einen Längsschnitt durch das Ende eines kunststoffisolierten Stahlrohres mit aufgeschobener Rohrverschlußkappe,

Fig. 2 verschiedene Querschnittsformen für die ringförmige Nut,

Fig. 3 eine Ausführungsform der erfindungsgemäßen Vorrichtung im Einsatz auf einem kunststoffisolierten, längsgeschnittenen Stahlrohr,

Fig. 4 eine weitere Ausführungsform einer erfindungsgemäßen Vorrichtung im Einsatz auf einem radial geschnittenen Stahlrohr.

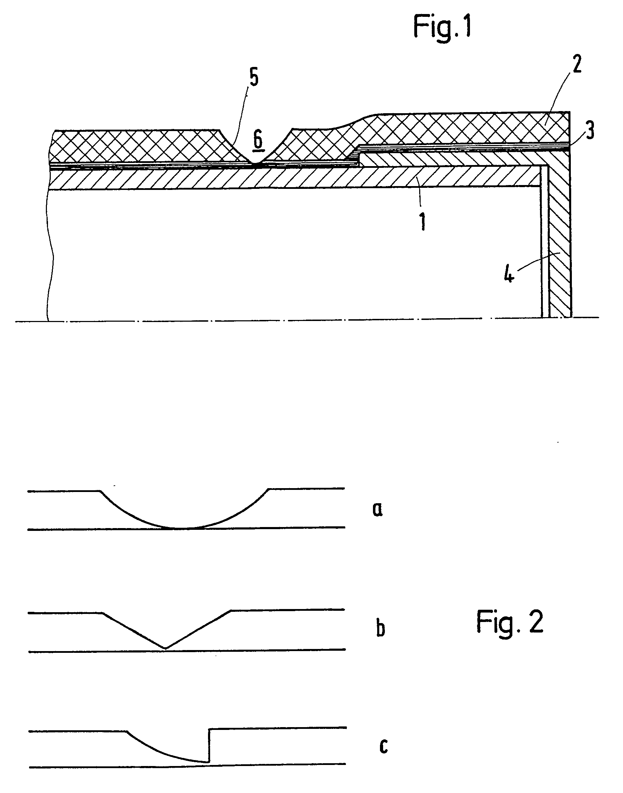

Auf das Ende des Stahlrohres 1 in Fig. 1 ist eine Rohrverschlußkappe 4 aufgeschoben, die mit ihrem zylindrischen Schaft die Rohroberfläche übergreift. Auf der Oberfläche des Stahlrohres ist über die Rohrverschlußkappe hinweg eine Kleberschicht 3 aufgetragen. Eine vorhandene Haftvermittlerschicht ist nicht gesondert eingezeichnet. Über der Kleberschicht 3 ist als thermoplastische Kunststoffisolierschicht eine Polyäthylenschicht 2 gelegt. Die Polyäthylenschicht 2 weist eine ringförmig um das Rohr herumlaufende eingeschnittene Nut 6 auf. Diese hat eine nach außen hin breiter werdende Öffnung. Nach dem Entfernen der Kunststoffisolierschicht am Rohrende verbleibt somit auf dem Stahlrohr 1 eine Polyäthylenschicht 2, deren Schnittfläche 5, zum Rohrende hin böschungsartig flach ausläuft. Die Nut 6 ist lediglich so tief eingeschnitten, daß ihr Grund noch in der Kleberschicht 3 liegt. Somit ist die auf dem Stahlrohr 1 aufgetragene Haftvermittlerschicht nicht verletzt worden.

In Fig. 2 sind mehrere Varianten für eine vorteilhafte Gestaltung des nutförmigen Schnittes dargestellt. Die Nut weist im Prinzip eine etwa U- bis V-förmige Querschnittsform auf. Besonders vorteilhaft im Hinblick auf den Abbau der Texturwirkungen ist die in Fig. 2a dargestellte parabolische Querschnittsform. Die Variante in Fig. 2c führt im Prinzip an der verbleibenden Kunststoffisolierung zur gleichen Schnittoberfläche, hat aber ansonsten den Vorteil, daß die Nut insgesamt eine kleinere Innenoberfläche aufweist und damit das Einschneiden geringere Kräfte erfordert.

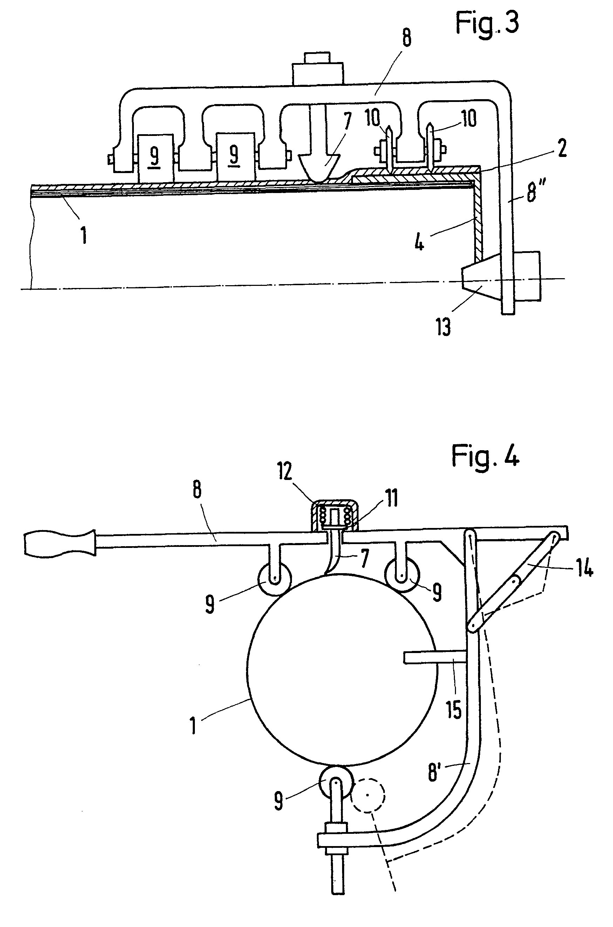

In Fig. 3 ist eine mögliche Variante für eine erfindungsgemäß Vorrichtung dargestellt. Das Stahlrohr 1 ist in Richtung der Längsachse geschnitten. Über das Rohrende ist eine Rohrverschlußkappe 4 geschoben. Die Oberfläche des Stahlrohres 1 und die Mantelfläche der Rohrverschlußkappe 4 sind mit der thermoplastischen Kunststoffisolierschicht 2 überzogen. Die im Einsatz befindliche Schneidevorrichtung besteht aus einem Tragegestell 8, das sich mit den Laufrädern 9 und 10 auf der Kunststoffisolierung abstützen kann. Weiterhin ist an dem Tragegestell 8 das Schneidwerkzeug 7 und über einen Bügel 8'' ein zylindrischer Dorn 13 angebracht, der in eine koaxial zur Rohrachse liegende Bohrung in der Stirnfläche der Rohrverschlußkappe 4 eingreift. Der Dorn 13 dient dazu, die Vorrichtung während des Schneidevorgangs zu zentrieren, um ein sicheres Herumführen um das Rohr 1 zu gewährleisten. In dieser Hinsicht sind auch die schmalen, vorzugsweise mit einer schneidenartigen Laufffläche gestalteten Laufräder 10 von Bedeutung. Sie drücken sich im Gegensatz zu den sich auf der Oberfläche der Kunststoffisolierung abstützenden Rädern 9 in die Kunststoffbeschichtung 2 ein.

Dadurch gewährleisten sie, daß eine axiale Verschiebung der Vorrichtung nicht stattfindet. Eine Beschädigung der Haftvermittlerschicht auf der Oberfläche des Stahlrohres 1 ist dadurch ausgeschlossen, daß die Laufräder 10 so angeordnet sind, daß sie im Bereich der Mantelfläche der Rohrverschlußkappe 4 laufen. Sie können sich zwar durch die weiche, vom unmittelbar vorhergehenden Beschichtungsvorgang noch warme Kunststoffisolierschicht 2 hindurch drücken, werden aber von dem härteren Kunststoffmantel der Rohrverschlußkappe 4 aufgehalten. Aus diesem Grunde ist der Durchmesser der Laufräder 10 etwa um den doppelten Betrag der Dicke der Kunststoffisolierschicht 2 kleiner als der Durchmesser der Laufräder 9. Die Handhabung der Schneidvorrichtung ist wie folgt:

Die Schneidvorrichtung wird mit dem Schneidwerkzeug 7 genau über die vorgesehene Stelle der Nut auf das Rohrende des Stahlrohres 1 aufgesetzt. Durch Druck in Richtung der Rohrachse drücken sich die Laufräder 10 in die Kunststoffisolierschicht 2 ein, während die Laufräder 9 sich ohne praktische Verformung der Kunststoffisolierschicht 2 auf dieser abstützen. Der zylindrische Dorn 13 greift in eine entsprechende Bohrung der Rohrverschlußkappe 4 ein und zentriert die gesamte Vorrichtung. Zur Erleichterung der Handhabung ist vorgesehend, daß der Dorn 13 in Richtung der Zylinderachse verschiebbar ist, so daß er nach dem Eindrücken der Räder 10 erst in die Bohrung eingeführt wird. Das Schneiden der Nut erfolgt dann in der Weise, daß die Schneidvorrichtung um das Rohr herumgedreht wird. Hierbei gräbt sich das Schneidwerkzeug 7 über eine Einlaufstrecke hinweg allmählich bis auf die vorgesehene Schnittiefe in die Kunststoffisolierschicht 2 ein. Hierzu wird während des Schneidvorgangs das Schneidwerkzeug 7 in Richtung auf die Rohrachse über einen festgelegten Weg zugestellt. Diese Zustellung kann beispielsweise, wie in Fig. 4 gezeigt wird, durch die Wirkung einer Feder 12 erfolgen, wobei eine Wegbegrenzung durch einen Anschlag 11 erreicht wird. Aber auch adere Arten der Zustellung wie z.B. mittels Spindeltreib oder Kniehebelantrieb sind möglich. Zur Schnittiefen - begrenzung kann auch ein sich hinter dem Schneiderwerkzeug 7 am Stahlrohr 1 abstützender Abstandshalter mit einer flachen, linsenartigen Anlagefläche dienen.

Eine andere Variante der erfindungsgemäßen Schneidvorrichtung ist Fig. 4 wiedergegeben. Diese Vorrichtung stützt sich über drei Laufräder 9 auf der Rohroberfläche ab. Die Laufräder 9 sind so angeordnet, daß sich die Schneidvorrichtung quasi an das Rohr anklammert, also nicht von selbst herunterfallen kann. Da die einzuschneidende Nut stets hinter der Rohrverschlußkappe 4 liegen muß, wäre ein Anlegen dieser Vorrichtung infolge der Verdickung durch die Rohrverschlußkappe schwierig, wenn das den beiden oberen Laufrädern 9 gegenüberliegende Laufrad 9 nicht an einem abklappbaren Arm 8' befestigt wäre. Durch den Kniehebel 14 läßt sich der Arm 8' leicht wieder in die durch einen Anschlag vorgegebene Position bringen und arretieren. Die abgeklappte Stellung ist in der Fig. 4 gestrichelt angedeutet. Weiterhin ist in dieser Vorrichtung vorgesehen, daß die Achse des unteren Laufrades 9 bezüglich der Entfernung von der Rohrachse eingestellt werden kann. Hierdurch ist es möglich, die gleiche Vorrichtung bei Rohren unterschiedlichen Durchmessers bzw. bei Rohren mit unterschiedlicher Beschichtungsdicke anzuwenden. Zur Erleichterung des Schneidvorgangs ist die Vorrichtung mit einem Handgriff ausgerüstet, Außerdem weist sie einen Anschlag 15 auf, der während des Schneidvorgangs an der Stirnfläche des Stahlrohres 1 bzw. der Rohrverschlußkappe 4 anliegt. Hierdurch ist eine problemlose Positionierung der Vorrichtung über dem gewünschten Ort für die Nut möglich.

**Patentansprüche**

1. Verfahren zur Entfernung einer mittels eines Klebers (3) auf ein Stahlrohr (1) aufgetragenen thermoplastischen Kunststoffisolierschicht (2) an einem Ende des Stahlrohres (1), wobei die thermoplastische Kunststoffisolierschicht (2) im Abstand vom Rohrende ringförmig eingeschnitten und der dem Rohrende zugewandte Abschnitt der Kunststoffisolierschicht abgezogen wird, dadurch gekennzeichnet, daß das Einschneiden als Schälvorgang zur Erzeugung einer ringförmig umlaufenden Nut (6) in der Kunststoffisolierschicht (2) mit über eine Einlaufstrecke hin allmählich bis auf den vorgesehenen Wert zunehmender Schnittiefe erfolgt, wobei zum Grund der Nut hin ihre Breite abnimmt und der Grund der Nut noch oberhalb der Unterseite der Kleberschicht (3) liegt, und daß durch in Umfangsrichtung des Stahlrohres (1) gesehen überlapptes Schneiden auch die Nuttiefe der Einlaufstrecke auf die vorgesehene Schnittiefe gebracht wird.

2. Vorrichtung zur Durchführung des Verfahrens nach Anspruch 1, dadurch gekennzeichnet, daß ein als Meissel oder gebogene Klinge ausgeführtes Schneidwerkzeug (7), dessen Schneidfläche im wesentlichen U- bis V-förmig gestaltet und im Einsatz zur Oberfläche des Stahlrohres (1) hin konvex gewölbt ist, an einem Tragegestell (8) befestigt ist, welches mittels Laufrädern (9, 10) in konstantem Abstand zur Oberfläche der Kunststoffisolierung (2) um das Stahlrohr (1) herumführbar ist, und daß das Schneidwerkzeug (7) während des Schneidens in Richtung auf die Rohrachse zustellbar ist, wobei die Höhe dieser Zustellung durch einen Anschlag (11) oder Ähnliches auf einen festen Wert begrenzbar ist.

3. Vorrichtung nach Anspruch 2, dadurch gekennzeichnet, daß für die Ausführung der Zustellbewegung eine auf das Schneidwerkzeug (7) wirkende Feder (12) vorgesehen ist.

4. Vorrichtung nach Anspruch 2, dadurch gekennzeichnet, daß das Schneidwerkzeug (7) mittels eines Spindeltriebs zustellbar ist.

5. Vorrichtung nach Anspruch 2, dadurch gekennzeichnet, daß das Schneidwerkzeug (7) mittels Hebelantrieb, insbesondere Kniehebelantrieb, zustellbar ist.

6. Vorrichtung nach einem der Ansprüche 2 bis 5, dadurch gekennzeichnet, daß zur Fixierung der bezüglich des Stahlrohres (1) axialen Position des Schneidwerkzeugs (7) an Tragegestell (8) ein sich auf der Rohrstirnfläche bzw. auf der Stirnfläche einer auf das Rohrende aufgeschobenen Rohrverschlußkappe (4) abstützender Anschlag (15) vorgesehen ist.

7. Vorrichtung nach einem der Ansprüche 2 bis 5, dadurch gekennzeichnet, daß das Tragegestell (8) nur eine einzige geometrische Achse für die Laufräder (9, 10) aufweist und zur Zentrierung bezüglich der Rohrachse mit einem zylinderförmig ausgebildeten Dorn (13) ausgestattet ist, welcher im Einsatz in eine zentrale Bohrung in der Stirnfläche einer auf das Rohrende aufgeschobenen Rohrverschlußkappe (4) eingreift.

8. Vorrichtung nach Anspruch 7, dadurch gekennzeichnet, daß auf der Achse mindestens ein Laufrad (10) mit schmaler, gegebenenfalls schneidenförmig ausgebildeter Lauffläche und einem Raddurchmesser, der kleiner, und zwar höchstens um den doppelten Betrag der Schichtdicke der Kunststoffisolierung (2) kleiner als der Raddurchmesser der übrigen Laufräder (9) ist, hinsichtlich seiner axialen Position so angeordnet ist, daß es im Einsatz den Teil der Kunststoffisolierung (2) berührt, der über dem zylindrischen Schaft einer auf das Stahlrohr (1) aufgeschobenen Rohrverschlußkappe (4) liegt und daß der Dorn (13) in axialer Richtung rückziehbar im Tragegestell (8) gelagert ist.

9. Vorrichtung nach einem der Ansprüche 2 bis 6, dadurch gekennzeichnet, daß das Tragegestell (8) drei geometrische Achsen für die Laufräder (9) aufweist, wobei die Achsen derart einander gegenüberliegend angeordnet sind, daß — im Einsatz im Rohrquerschnitt von der Rohrachse aus über alle drei Achsen gesehen — zwischen der ersten und der dritten Achse ein Winkel von mehr als 180° liegt.

10. Vorrichtung nach Anspruch 9, dadurch gekennzeichnet, daß eine Achse in Richtung auf die von den beiden anderen Achsen gebildete Ebene zustellbar und arretierbar ist.

11. Vorrichtung nach einem der Ansprüche, 9 oder 10, dadurch gekennzeichnet, daß eine Achse ausschwenkbar und in Arbeitsstellung arretierbar im Tragegestell (8) gelagert ist.

12. Vorrichtung nach einem der Ansprüche 2—11, dadurch gekennzeichnet, daß in Schnittrichtung hinter dem Schneidwerkzeug (7) ein sich beim Schneiden zwecks Schnittiefenbegrenzung zur Oberfläche des Stahlrohres (1) hin abstützender Abstandshalter mit einer flachen, linsenartigen Auflagefläche angeordnet ist.

**Revendications**

1. Procédé pour éliminer, à une extrémité d'un tube d'acier (1), une couche isolante thermoplastique de matière synthétique (2), appliquée sur le tube d'acier (1) au moyen d'une colle (3), la couche isolante thermoplastique de matière synthétique (2) étant entaillée de façon annulaire à une certaine distance de l'extrémité du tube et le tronçon de la couche isolante de matière synthétique, proche de l'extrémité du tube, étant retiré, caractérisé en ce que l'entaillage a lieu par rabotage ou décapage pour créer une gorge périphérique annulaire (6) dans la couche isolante de matière synthétique (2) ayant une profondeur croissant sur une étendue d'entrée graduellement jusqu'à la valeur prévue, sa largeur décroissant vers le fond de la gorge et le fond de la gorge se trouvant encore au-dessus du dessous de la couche de colle (3), et en ce que, en coupant à recouvrement en direction périphérique du tube d'acier (1), la profondeur de gorge de l'étendue d'entrée est également amenée à la profondeur de coupe prévue.

2. Dispositif pour la mise en oeuvre du procédé selon la revendication 1, caractérisé en ce qu'un outil de coupe (7), réalisé sous forme d'un ciseau ou d'une lame courbée, dont la surface de coupe présente une forme générale de U à V et, en service, est cintrée de façon convexe vers la surface du tube d'acier (1), est fixé à un bâti de support (8), lequel est déplaçable autour du tube d'acier (1), à une distance constante de la surface de l'isolation de matière synthétique (2), au moyen de roues de roulement (9, 10), et en ce que l'outil de coupe (7), pendant la coupe, peut être avancé en direction de l'axe du tube, l'étendue de cette avance pouvant être limitée à une valeur fixe par une butée (11) ou analogue.

3. Dispositif selon la revendication 2, caractérisé en ce que, pour effectuer le mouvement d'avance, est prévu un ressort (12) agissant sur l'outil de coupe (7).

4. Dispositif selon la revendication 2, caractérisé en ce que l'outil de coupe (7) peut être avancé au moyen d'une commande à vis sans fin.

5. Dispositif selon la revendication 2, caractérisé en ce que l'outil de coupe (7) peut être avancé au moyen d'un entraînement à levier, en particulier à levier coudé.

6. Dispositif selon une des revendications 2 à 5, caractérisé en ce que, pour fixer la position axiale relativement au tube d'acier (1) de l'outil de coupe (7) sur le bâti de support (8), est prévue une butée (15) s'appuyant sur la face frontale du tube ou sur la face frontale d'un capuchon de fermeture du tube (4) enfilé sur l'extrémité du tube.

7. Dispositif selon une des revendications 2 à 5, caractérisé en ce que le bâti de support (8) ne présente qu'un axe géométrique unique pour les roues (9, 10) et, pour son centrage par rapport à l'axe du tube, il est muni d'un mandrin (13) de forme cylindrique, lequel, en service, s'engage dans un perçage central dans la face frontale d'un capuchon de fermeture du tube (4) enfilé sur l'extrémité du tube.

8. Dispositif selon la revendication 7, caractérisé en ce que, sur l'axe, au moins une roue (10) ayant une surface de roulement étroite, le cas échéant en forme de taillant, et un diamètre qui est plus petit, et en vérité au maximum plus petit de la double valeur de l'épaisseur de l'isolation de matière synthétique (2) que le diamètre des autres roues (9), est agencée, en ce qui concerne sa position axiale, de sorte que, en service, elle touche la partie de l'isolation de matière synthétique (2), qui se trouve au-dessus du corps cylindrique d'un capuchon de fermeture du tube (4) enfilé sur le tube d'acier (1), et en ce que le mandrin (13) est monté dans le bâti de support (8) en pouvant être ramené en direction axiale.

9. Dispositif selon une des revendications 2 à 6, caractérisé en ce que le bâti de support (8) présente trois axes géométriques pour les roues (9), les axes étant agencés de façon opposée l'un à l'autre, de sorte qu'un angle de plus de 180° s'étend entre le premier et le troisième axe, angle mesuré en service en section transversale du tube à partir de l'axe du tube en passant par les trois axes.

10. Dispositif selon la revendication 9, caractérisé en ce qu'un axe peut être avancé en direction du plan formé par les deux autres axes et arrêté.

11. Dispositif selon une des revendications 9 ou 10, caractérisé en ce qu'un axe est monté, de façon pivotante et blocable en position de travail, dans le bâti de support (8).

12. Dispositif selon une des revendications 2 à 11, caractérisé en ce que, dans la direction de coupe derrière l'outil de coupe (7), est disposée une entretoise, s'appuyant lors de la coupe en vue de limiter la profondeur de coupe vers la surface du tube d'acier (1), l'entretoise ayant une surface d'appui plate en forme de lentille.

**Claims**

1. A process for the removal of a thermoplastic plastic insulating layer (2) applied to a steel pipe (1) by means of an adhesive (3) at one end of the steel pipe (1), the thermoplastic plastic insulating layer (2) being cut in a ring shape at a distance from the pipe end and the section of the plastic insulating layer facing the pipe end being removed, characterised in that the cutting takes place as a peeling process to produce an annular circumambient groove (6) in the plastic insulating layer (2) with a cutting depth gradually increasing up to the intended value over a running-in section, the width of the groove decreasing towards the base of the groove and the base of the groove still being located above the underside of the adhesive layer (3), and that the groove depth of the running-in section is also brought to the intended cutting depth by overlapped cutting, viewed in the circumferential direction of the steel pipe (1).

2. A device for carrying out the process according to Claim 1, characterised in that a cutting tool (7), which is designed as a chisel or curved blade and the cutting surface of which is substantially U-shaped to V-shaped and is curved in convex manner relative to towards the surface of the steel pipe (1) when in use, is attached to a supporting structure (8) which can be guided around the steel pipe (1) at a constant distance from the surface of the plastic insulation (2) by means of wheels (9, 10), and that the cutting tool (7) can be advanced towards the pipe axis during cutting, the height of said advancement being able to be limited to a fixed value by a stop (11) or the like.

3. A device according to Claim 2, characterised in that a spring (12) acting on the cutting tool (7) is provided for carrying out the advancing movement.

4. A device according to Claim 2, characterised in that the cutting tool (7) can be advanced by means of a spindle drive.

5. A device according to Claim 2, characterised in that the cutting tool (7) can be advanced by means of a lever drive, in particular an articulated lever drive.

6. A device according to one of Claims 2 to 5, characterised in that in order to fix the axial position of the cutting tool (7) on the supporting structure (8) relative to the steel pipe (1), a stop (15) is provided which is supported on the end face of the pipe or on the end face of a pipe closing cap (4) pushed onto the end of the pipe.

7. A device according to one of Claims 2 to 5, characterised in that the supporting structure (8) has only a single geometric axis for the wheels (9, 10) and is equipped with a cylindrical mandrel (13) for centring relative to the pipe axis, which mandrel in use engages in a central hole in the end face of a pipe closing cap (4) pushed onto the end of the pipe.

8. A device according to Claim 7, characterised in that at least one wheel (10) with a narrow, optionally knife-shaped running surface and a wheel diameter which is smaller, namely smaller at most by twice the amount of the layer thickness of the plastic insulation (2), than the wheel diameter of the other wheels (9) is arranged on the axis relative to its axial position in such a manner that, in use, it touches the part of the plastic insulation (2) which lies over the cylindrical shaft of a pipe closing cap (4) pushed onto the steel pipe (1), and that the mandrel (13) is mounted in the supporting structure (8) so as to be withdrawable in the axial direction.

9. A device according to one of Claims 2 to 6, characterised in that the supporting structure (8) has three geometric axes for the wheels (9), the axes being arranged opposite one another in such a manner that — in use, viewed in the pipe cross-section from the pipe axis across all three axes — there is an angle of more than 180° between the first and third axes.

10. A device according to Claim 9, characterised in that one axis can be advanced and locked in the direction of the plane formed by the other two axes.

11. A device according to one of Claims 9 or 10, characterised in that one axis is mounted in the supporting structure (8) so as to be pivotable outwards and lockable in the operating position.

12. A device according to one of Claims 2—11, characterised in that a spacer means having a flat, lenticular bearing face, which means during cutting is supported on the surface of the steel pipe (1) in order to limit the cutting depth, is arranged in the direction of cutting behind the cutting tool.

# Fig.1

# Fig. 2

Fig. 3

Fig. 4